# DEMANDE DE BREVET EUROPEEN

(11) **EP 2 746 968 A1**
(43) Date de publication de la demande: **25.06.2014**
(21) Numéro de dépôt: 13197913.0
(22) Date de dépôt: 18.12.2013
(51) Int. Cl.: G06F 17/30, G06F 3/0481

(54) **Procédé de gestion d'un système d'information géographique adapté pour être utilisé avec au moins un dispositif de pointage, avec création d'associations entre objets numériques**

(30) Priorité: 21.12.2012 FR 1262596
(71) Demandeur: Orange, 75015 Paris (FR)
(72) Inventeur: Romano, Philippe, 06800 Cagnes-sur-Mer (FR); Giraudon, Vincent, 06600 Antibes (FR)
(74) Mandataire: Guéné, Patrick

(57) **Abrégé**

Il est proposé un procédé de gestion d'un système d'information géographique adapté pour être utilisé avec au moins un dispositif de pointage (501). Le système d'information géographique comprend un équipement central (601) accédant à une base de données (6010) contenant une pluralité d'objets numériques. Chaque objet numérique possède un identifiant et est défini dans la base de données par une composante géométrique définissant une position géographique et par une composante descriptive définissant au moins un attribut descriptif. L'équipement central est adapté pour déterminer, en fonction des composantes géométriques des objets numériques et d'informations sur la position et l'orientation d'un dispositif de pointage donné, si la position d'un des objets numériques est pointée par le dispositif de pointage donné. L'équipement central effectue une étape de création d'une association (52) entre au moins deux objets numériques (108, 109) contenus dans la base de données, afin de former un groupe d'objets numériques associés.

## Description

### 1. DOMAINE DE L'INVENTION

Le domaine de l'invention est celui des systèmes d'information géographique (SIG) comprenant un équipement central accédant à une base de données contenant une pluralité d'objets numériques. On suppose que chaque objet numérique possède un identifiant et est défini dans la base de données par une composante géométrique définissant une position géographique et par une composante descriptive définissant au moins un attribut descriptif.

Plus précisément, l'invention concerne une technique de gestion d'un tel système d'information géographique, dans le cas où ce dernier est adapté pour être utilisé avec au moins un dispositif de pointage. Dans ce cas, l'équipement central est adapté pour déterminer, en fonction des composantes géométriques des objets numériques et d'informations sur la position et l'orientation d'un dispositif de pointage donné, si la position d'un des objets numériques de la base de données est pointée par le dispositif de pointage donné.

### 2. ARRIÈRE-PLAN TECHNOLOGIQUE

Un exemple de système d'information géographique adapté pour être utilisé avec un dispositif de pointage est décrit dans la demande de brevet français déposée le 29 mars 2012, sous le numéro FR1252873 et au nom de France Telecom.

Dans la demande FR1252873, il est rappelé que dans les techniques antérieures, pour déterminer si un dispositif de pointage pointe (c'est-à-dire est dirigé vers) un dispositif cible (dispositif pointé), le dispositif de pointage et le dispositif pointé doivent être prévus pour fonctionner ensemble (l'un comprend un émetteur et l'autre un récepteur apte à détecter un signal émis par l'émetteur). Par exemple, un téléviseur comprend typiquement un récepteur infrarouge capable de recevoir des signaux infrarouges émis par un boîtier de télécommande fourni avec ce téléviseur.

L'inconvénient majeur de ces techniques antérieures est qu'il est nécessaire d'établir un canal de communication entre le dispositif de pointage et le dispositif pointé (grâce au couple émetteur/récepteur), ce qui a conduit à la réalisation de matériels spécifiques à chaque fabriquant, peu évolutifs et entraînant leurs multiplicités.

La technique proposée dans la demande FR1252873 (et dont le fonctionnement est détaillé plus bas en relation avec les **figures 1** **et** **2****)** consiste à utiliser un équipement central pour déterminer quel(s) dispositif(s) est(sont) pointé(s) par le dispositif de pointage. Cette technique offre ainsi plusieurs avantages par rapport aux techniques antérieures précitées. En effet, c'est l'équipement central qui obtient une information de pointage tridimensionnel, c'est-à-dire une information indiquant vers quel(s) dispositif(s) pointé(s) est orienté physiquement le dispositif de pointage, dans un espace à trois dimensions. Il n'est donc pas nécessaire que le dispositif de pointage et le ou les dispositifs pointés soient conçus pour fonctionner ensemble (pas de nécessité que l'un comprenne un émetteur et l'autre un récepteur adapté à cet émetteur). Pour l'équipement central, la connaissance de l'information de pointage tridimensionnel permet de créer une association entre le dispositif de pointage et le ou les dispositifs pointés. Il est possible de créer des applications découlant de cette association (notamment, mais non exclusivement, pour commander le dispositif pointé par le dispositif de pointage).

Cependant, la technique de la demande FR1252873 peut encore être améliorée, notamment dans l'usage et la nature des objets contenus dans la base de données à laquelle accède l'équipement central.

### 3. EXPOSÉ DE L'INVENTION

Dans un mode de réalisation particulier de l'invention, il est proposé un procédé de gestion d'un système d'information géographique adapté pour être utilisé avec au moins un dispositif de pointage, le système d'information géographique comprenant un équipement central accédant à une base de données contenant une pluralité d'objets numériques, chaque objet numérique possédant un identifiant et étant défini dans la base de données par une composante géométrique définissant une position géographique et par une composante descriptive définissant au moins un attribut descriptif, l'équipement central étant adapté pour déterminer, en fonction des composantes géométriques des objets numériques et d'informations sur la position et l'orientation d'un dispositif de pointage donné, si la position d'un des objets numériques est pointée par le dispositif de pointage donné. L'équipement central effectue une étape de création d'une association entre au moins deux objets numériques contenus dans ladite base de données, afin de former un groupe d'objets numériques associés.

Le principe général de l'invention consiste donc à créer des associations entre des objets numériques (deux ou plus) contenus dans la base de données du système d'information géographique.

Ainsi, cette approche tout à fait nouvelle et inventive permet d'obtenir des groupes d'objets numériques associés permettant des usages supplémentaires par rapport à ceux proposés dans la demande de brevet français FR1252873 (voir discussion ci-dessus).

La création d'une association (et donc d'un groupe d'objets numériques associés) permet notamment de stocker et de retrouver des informations (relatives à des objets numériques contenus dans la base de données) par un procédé mnémotechnique très simple. En effet, en pointant vers un premier objet numérique appartenant à un groupe d'objets numériques associés (ou plus précisément vers la position de ce premier objet numérique, telle que définie dans sa composante géométrique), l'utilisateur peut accéder à tous les objets numériques de ce groupe (et donc aux attributs descriptifs de tous ces objets numériques). En d'autres termes, il suffit de se souvenir de la position du premier objet numérique. Ce procédé mnémotechnique est particulièrement simplifié dans le cas où le premier objet numérique dont la position est pointée est un modèle d'un objet réel, puisque dans ce cas l'utilisateur oriente physiquement le dispositif de pointage (dans un espace à trois dimensions) vers la position de l'objet réel.

La création d'une association entre un premier objet numérique et au moins un second objet numérique permet également d'ajouter (indirectement) les fonctions du second objet numérique au premier objet numérique, puisque le pointage du premier objet numérique permet d'accéder au second objet numérique.

Par exemple, cela permet à un objet réel du commun (tel qu'un réfrigérateur, un cadre photo, une porte, etc.) :
- d'être fictivement enrichi de nouvelles fonctions (via l'objet numérique qui le modélise dans la base de données et qui est lui-même associé à un ou plusieurs autre(s) objet(s) numérique(s) de la base de données) ; et
- de stocker fictivement des informations utiles (via l'objet numérique qui le modélise dans la base de données et qui est lui-même associé à un ou plusieurs autre(s) objet(s) numérique(s) de la base de données), consultables et actualisables par toutes les personnes (par exemple les membres d'une famille ou les employés d'une entreprise travaillant sur un site) pouvant voir l'objet réel et le pointer physiquement avec un dispositif de pointage (pour accéder à l'objet numérique qui le modélise).

Selon une caractéristique particulière, ladite association est définie par au moins un paramètre appartenant au groupe comprenant :
- un premier paramètre indiquant si, et dans l'affirmative comment, la composante géométrique des objets numériques associés doit être modifiée après que la composante géométrique de l'un des objets numériques associés a été modifiée ;
- un deuxième paramètre indiquant si au moins une condition prédéterminée doit être vérifiée, avant d'autoriser le dispositif de pointage donné à effectuer une action relative au(x) attribut(s) défini(s) par la composante descriptive d'au moins un des objets numériques associés ; et
- un troisième paramètre indiquant au moins une fonction devant être appliquée de manière similaire aux objets numériques associés.

Ainsi, en fonction du ou des paramètres utilisés, il est possible de définir de nombreuses différentes associations, et donc de nombreux usages.

Selon une caractéristique particulière, ladite action appartient au groupe comprenant : visualisation, utilisation, modification, ajout et suppression.

Cette liste d'actions n'est pas exhaustive. La diversité des actions possibles permet d'augmenter la diversité des associations pouvant être définies, et donc la diversité des usages proposés.

Selon une caractéristique particulière, le groupe d'objets numériques associés appartient au groupe comprenant :
- des couples dont chacun des deux objets numériques est un modèle d'un objet réel ;
- des couples dont un objet numérique est un objet purement virtuel dont la composante géométrique définit une position géographique indépendamment de la présence ou non d'un objet réel à ladite position géographique, et l'autre objet numérique est un modèle d'un objet réel ; et
- des couples dont chacun des deux objets numériques est un objet purement virtuel dont la composante géométrique définit une position géographique indépendamment de la présence ou non d'un objet réel à ladite position géographique.

Ainsi, les objets numériques associés d'un même groupe sont soit de même nature, soit de natures différentes, sachant que les objets numériques contenus dans la base de données du système d'information géographique peuvent être de deux natures : un objet numérique est soit un modèle d'un objet réel, soit un objet purement virtuel (c'est-à-dire qui n'est pas le modèle d'un objet réel). Il est à noter que seule la première nature d'objet (modèle d'un objet réel) est utilisée dans la technique de la demande de brevet français FR1252873. L'utilisation d'objets purement virtuels, associés entre eux ou avec des modèles d'objets réels, permet donc d'obtenir des groupes d'objets numériques associés permettant des usages supplémentaires par rapport à ceux proposés dans la demande de brevet français FR1252873.

Selon une caractéristique particulière, lesdits objets réels appartiennent au groupe comprenant :
- au moins un objet multimédia ; et
- au moins un lien permettant l'accès à un objet multimédia.

Ainsi, de nombreux usages impliquant des objets réels peuvent être envisagés puisqu'on ne s'intéresse pas uniquement aux objets réels avec lesquels il est possible d'interagir (par exemple, téléviseurs, équipements réseau, vidéo projecteurs, décodeurs, imprimantes...), mais aussi aux objets réels avec lesquels il n'est pas possible d'interagir (par exemple, réfrigérateurs, cadres photos, portes...).

Selon une caractéristique particulière, la composante descriptive de chaque objet purement virtuel définit au moins un attribut descriptif appartenant au groupe comprenant :
- des objets multimédias ; et
- des liens permettant chacun l'accès à un objet multimédia.

En d'autres termes, les informations auxquelles l'utilisateur peut accéder se présentent sous la forme d'objets multimédias, qui sont stockés soit dans la base de données (en tant qu'attributs des objets numériques), soit hors de la base de données (les attributs comprenant alors les liens (adresses URL par exemple) vers les dispositifs stockant ces objets multimédias.

Selon une caractéristique particulière, au moins un des objets numériques associés dudit groupe fait également partie d'au moins un autre groupe d'objets numériques associés.

En d'autres termes, il est possible de gérer des cascades d'associations. Par exemple des mémos virtuels (objets virtuels) sont associés à un tableau virtuel (objet virtuel), et ce dernier est lui-même associé à un autre objet de la base de données (par exemple le modèle d'un objet réel, tel qu'un réfrigérateur ou un cadre photo).

Dans une première mise en oeuvre, ladite étape de création d'une association comprend les étapes suivantes :
a) détermination par l'équipement central d'un premier objet numérique dont la position est pointée par le dispositif de pointage donné ;
b) création par l'équipement central d'un second objet numérique, dont la composante géométrique définit la même position géographique que la composante géographique du premier objet numérique, et dont la composante descriptive comprend un attribut descriptif sélectionné via une interface homme-machine du dispositif de pointage donné; et
c) création par l'équipement central d'une association entre lesdits premier et second objets numériques.

Dans cette première mise en oeuvre, on crée le second objet numérique puis on l'associe à un premier objet numérique qui existe déjà.

Selon une caractéristique particulière de cette première mise en oeuvre, les étapes a), b) et c) sont effectuées par l'équipement central sur requête du dispositif de pointage donné.

Dans une seconde mise en oeuvre, ladite étape de création d'une association comprend les étapes suivantes :
a') détermination par l'équipement central d'un premier objet numérique dont la position est pointée par le dispositif de pointage donné ;
b') détermination par l'équipement central d'un second objet numérique dont la position est pointée par le dispositif de pointage donné ; et
c') création par l'équipement central d'une association entre lesdits premier et second objets numériques.

Dans cette seconde mise en oeuvre, les premier et second objets numériques existent déjà avant qu'on les associe.

Selon une caractéristique particulière de cette seconde mise en oeuvre, les étapes a'), b') et c') sont effectuées par l'équipement central sur requête du dispositif de pointage donné.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

Dans un autre mode de réalisation de l'invention, il est proposé un système d'information géographique adapté pour être utilisé avec au moins un dispositif de pointage, le système d'information géographique comprenant un équipement central accédant à une base de données contenant une pluralité d'objets numériques, chaque objet numérique possédant un identifiant et étant défini dans la base de données par une composante géométrique définissant une position géographique et par une composante descriptive définissant au moins un attribut descriptif, l'équipement central étant adapté pour déterminer, en fonction des composantes géométriques des objets numériques et d'informations sur la position et l'orientation d'un dispositif de pointage donné, si la position d'un des objets numériques est pointée par le dispositif de pointage donné. L'équipement central comprend des moyens de création d'une association entre des premier et second objets numériques contenus dans ladite base de données, afin de former un groupe d'objets numériques associés.

Avantageusement, le système d'information géographique comprend des moyens de mise en oeuvre des étapes qu'il effectue dans le procédé de gestion tel que décrit précédemment, dans l'un quelconque de ses différents modes de réalisation.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 est un synoptique illustrant un mécanisme de gestion du pointage d'un dispositif cible par un dispositif de pointage, grâce à un système d'information géographique selon la technique de la demande FR1252873 ;
- la figure 2 est un organigramme illustrant l'algorithme exécuté par le système d'information géographique dans le mécanisme de gestion du pointage illustré sur la figure 1 (technique de la demande FR1252873) ;
- les figures 3 et 3bis présentent la structure d'un dispositif de pointage et d'un équipement central respectivement, selon un mode de réalisation particulier de l'invention ;
- les figures 4 et 4bis présentent les algorithmes exécutés par le dispositif de pointage (figure 4) et le système d'information géographique (figure 4bis) dans un premier exemple d'association entre objets numériques selon l'invention, dans le contexte particulier illustré sur la figure 5 ;
- les figures 6 et 6bis présentent les algorithmes exécutés par le dispositif de pointage (figure 6) et le système d'information géographique (figure 6bis) dans un deuxième exemple d'association entre objets numériques selon l'invention, dans le contexte particulier illustré sur la figure 7 ;
- les figures 8 et 8bis présentent les algorithmes exécutés par le dispositif de pointage (figure 8) et le système d'information géographique (figure 8bis) dans un troisième exemple d'association entre objets numériques selon l'invention, dans le contexte particulier illustré sur la figure 9 ;
- les figures 10 et 10bis présentent les algorithmes exécutés par le dispositif de pointage (figure 10) et le système d'information géographique (figure 10bis) dans une première technique selon l'invention, pour définir la position d'un objet numérique lors de sa création, dans le contexte particulier illustré sur la figure 11;
- les figures 12 et 12bis présentent les algorithmes exécutés par le dispositif de pointage (figure 12) et le système d'information géographique (figure 12bis) dans une seconde technique selon l'invention, pour définir la position d'un objet numérique lors de sa création, dans le contexte particulier illustré sur la figure 13.

### 5. DESCRIPTION DÉTAILLÉE

Sur toutes les figures du présent document, les éléments et étapes identiques sont désignés par une même référence numérique.

### 5.1 Rappel de la technique de la demande FR1252873

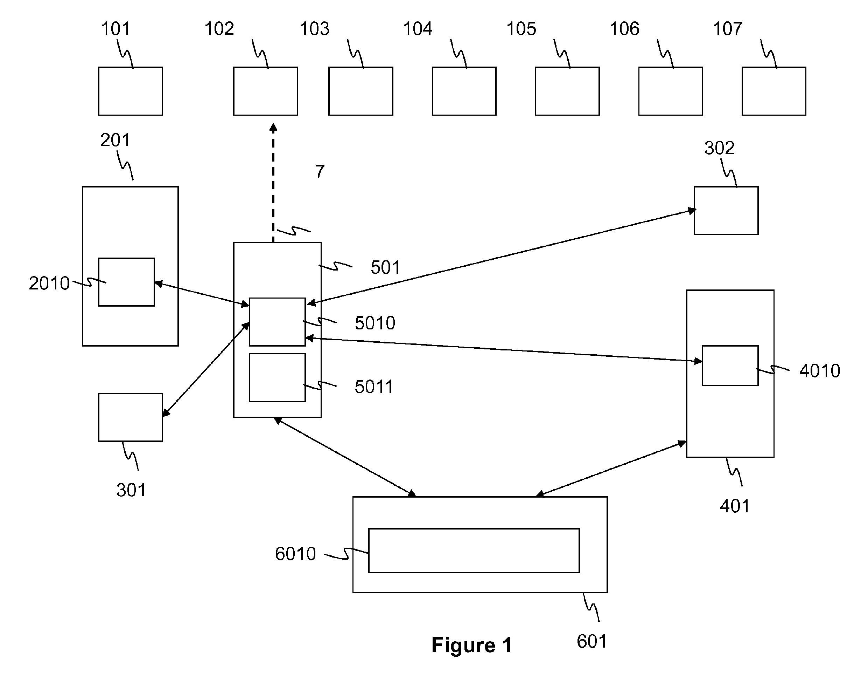

On présente maintenant, en relation avec la **figure 1****,** un mécanisme de gestion du pointage d'un dispositif cible (objet réel) par un dispositif de pointage, grâce à un système d'information géographique (SIG) selon la technique de la demande FR1252873.

Dans cet exemple, le système comprend :
- des appareils 101 à 107 (par exemple une porte 101, un vidéo projecteur 102, un appareil d'obturation 103, un décodeur 104, un dispositif de réseau LAN IP 105, une imprimante IP 106, un autocommutateur téléphonique privé (PBX) 107...) qui n'embarquent pas de module de localisation ;
- des appareils 301, 302 qui sont uniquement des modules de localisation ;
- des appareils 201, 401 (par exemple un téléviseur 201 et un équipement réseau (routeur, passerelle, décodeur) 401) qui embarquent un module de localisation 2010, 4010 permettant de déterminer leurs positions (automatiquement, par calcul avec l'aide de l'équipement central 601) ;
- des appareils (dans un souci de simplification de la figure 1, un seul référencé 501 y est représenté) qui sont des terminaux mobiles (smartphones, tablettes, ordinateurs portables, baguettes magique, jouets...) qui embarquent un module de localisation 5010, ainsi qu'un ou plusieurs capteurs 5011 (accéléromètres, gyroscopes, boussoles...) permettant de déduire leur orientation dans un espace 3D;
- un équipement central (aussi appelé calculateur) 601 qui agrège, calcule et manipule les informations (notamment les informations de position) relatives aux autres appareils précités 101 à 107, 201, 301, 302, 401, 501, et aux données environnementales et temporelles (plan, schémas...). Toutes ces données sont stockées dans une base de données 6010, appelée par la suite « base de données SIG » (avec l'acronyme SIG pour « Système d'Information Géographique »). La base de données SIG 6010 possède également une représentation en plan 2D et/ou 3D des bâtiments ou de la zone géographique dans laquelle se trouvent tous les appareils.

L'équipement central 601 est par exemple connecté à un réseau (local LAN, ou distant WAN comme dans une solution de type Cloud), par l'intermédiaire de l'équipement réseau 401. Dans une variante, l'équipement central 601 est intégré dans l'équipement réseau 401. L'équipement central 601 peut compléter et/ou actualiser automatiquement sa base de données SIG 6010. Un administrateur peut également ajouter ou modifier les données de la base de données SIG.

Dans une implémentation particulière, les modules de localisation 2010, 301, 302, 4010, 5010 sont des modules de localisation radio Ultra Large Bande (aussi appelés « modules ULB » ou « modules UWB » (pour « Ultra Wide Band » en anglais)). Ils forment un réseau de géolocalisation, permettant de déterminer les distances entre modules de localisation en utilisant des mesures du temps de vol. Dès qu'ils sont en nombre suffisant, il devient possible de déterminer la position de chacun des autres modules de localisation, par triangulation : à partir de mesures d'angles ou de mesures de distances relatives. Les modules de localisation sont autonomes, ils peuvent détecter et/ou signaler leur présence à des modules voisins (à portée de signal) et en informer l'équipement central 601.

Dans l'exemple de la figure 1, les positions (coordonnées en 3D x,y,z) des appareils 301, 302 (qui sont uniquement des modules de localisation) sont connues (positions de référence) et stockées dans la base de données SIG de l'équipement central 601.

Grâce aux modules de localisation 2010, 4010 embarqués dans les appareils 201, 401, les positions de ces derniers sont calculées automatiquement par l'équipement central 601 et stockées dans sa base de données SIG.

Ainsi, la connaissance des positions des appareils 201, 301, 302, 401, installés à des positions de références connues, permettent de déterminer (par calcul de triangulation) la position de chacun des terminaux mobiles 501. Par exemple, le module de localisation 5010, compris dans le terminal mobile 501, communique avec les modules de localisation des appareils 201, 301, 302, 401 placés à des positions connues. Ceci permet de déterminer des distances entre le module de localisation 5010 et les modules de localisation des appareils 201, 301, 302, 401. Puis, l'équipement central 601 obtient ces distances (elles lui sont transmises par le terminal mobile 501 et/ou par au moins un des appareils 201, 301, 302, 401). Enfin, l'équipement central 601 détermine la position du terminal mobile 501, par triangulation, en fonction des distances précitées et des positions connues des modules de localisation embarqués dans les appareils 201, 301, 302, 401. Dans ce but, une liaison de communication est établie entre, d'une part, l'équipement central 601, et d'autre part, le terminal mobile 501 et/ou les appareils 201, 301, 302. Cette liaison utilise par exemple un réseau Wifi local ou tout autre réseau auquel le terminal mobile 501 et/ou les appareils 201, 301, 302 accède.

Ainsi, l'équipement central 601 peut suivre en temps réel les déplacements de tous les terminaux mobiles (notamment celui référencé 501 sur la figure 1) qui comprennent un module de localisation. L'équipement central 601 prend en compte la dimension temporelle car les appareils (notamment les terminaux mobiles) peuvent être en mouvement. L'équipement central 601 est capable de gérer plusieurs dispositifs de pointages simultanément.

Toutes les positions (coordonnées en 3D x,y,z) des appareils 101 à 107 (qui ne comprennent pas de module de localisation) sont connues et stockées dans la base de données SIG 6010 de l'équipement central 601.

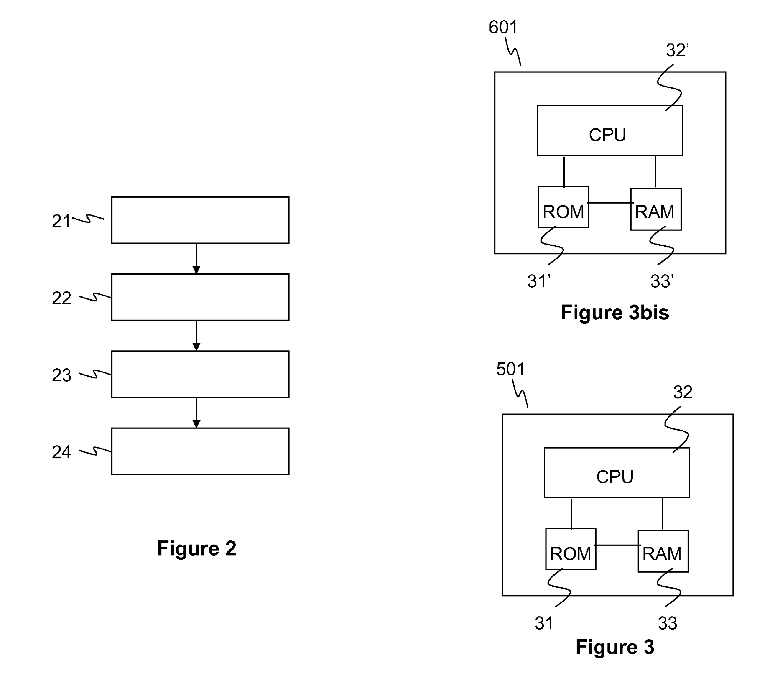

On présente maintenant, en relation avec l'organigramme de la **figure 2****,** l'algorithme exécuté par l'équipement central (calculateur) 601 du système d'information géographique, dans le mécanisme de gestion du pointage illustré sur la figure 1 (technique de la demande FR1252873).

On cherche à déterminer vers quel(s) appareil(s) du système l'utilisateur dirige un dispositif de pointage, c'est-à-dire quel est ou quels sont les appareils pointés par le dispositif de pointage. Il s'agit d'offrir à l'utilisateur un moyen simple et naturel de désigner le(s) appareil(s) avec le(s)quel(s) il veut interagir.

A titre d'exemple illustratif, on suppose dans la suite de la description que le dispositif de pointage est le terminal mobile 501 et que l'utilisateur le pointe vers le vidéo projecteur 102. L'axe d'orientation du dispositif de pointage est symbolisé par la flèche en pointillés référencée 7 sur la figure 1.

Dans une étape 21, l'équipement central 601 obtient une information sur la position du terminal mobile 501 (dispositif de pointage). Comme expliqué ci-dessus (cf figure 1), grâce aux appareils 201, 301, 302, 401, la position du terminal mobile 501 est connue et suivie en temps réel par l'équipement central 601, qui centralise toutes les informations dans sa base de données SIG 6010.

Dans une étape 22, l'équipement central 601 obtient une information sur l'orientation du terminal mobile 501. Comme expliqué ci-dessus (cf figure 1), le terminal mobile 501 comprend un ou plusieurs capteurs (accéléromètres, gyroscopes, boussoles...) lui permettant de déduire son orientation et de transmettre cette information d'orientation au calculateur 601.

Dans une étape 23, l'équipement central 601 obtient une information sur la position des autres appareils 101 à 107, 201, 301, 302, 401 (dispositifs cibles). Comme expliqué ci-dessus (cf figure 1), ceci est effectué en lisant le contenu de la base de données SIG 6010 de l'équipement central 601.

Dans une étape 24, l'équipement central 601 détermine l'appareil ou le groupe d'appareils pointés par le terminal mobile 501, en fonction de :
- l'information sur la position du terminal mobile 501 ;
- l'information sur l'orientation du terminal mobile 501 ; et
- l'information sur les positions des autres appareils 101 à 107, 201, 301, 302, 401.

Il suffit à l'utilisateur de changer l'orientation et/ou la position du terminal mobile 501 pour désigner une ou plusieurs nouvelles cibles (appareil(s) pointé(s)).

Ainsi, avec la technique proposée, la position et l'orientation dans l'espace du terminal mobile 501 (dispositif de pointage), couplées aux positions des autres appareils (grâce au calculateur 601), suffisent pour déterminer le ou les appareils pointés par le terminal mobile 501. En fonction des applications, l'association entre le terminal mobile 501 (dispositif de pointage) et le ou les appareils pointés peut être utilisée de diverses manières. Notamment, mais non exclusivement, le terminal mobile 501 peut commander un appareil pointé, via l'équipement central 601 (donc sans communication directe entre dispositif de pointage et dispositif pointé).

### 5.2 Principe général de la technique proposée

L'équipement central 601 intègre ou s'appuie sur la base de données SIG 6010 qui contient une pluralité d'objets numériques. Chaque objet numérique est défini dans la base de données par :
- un identifiant ;
- une composante géométrique, définissant une position géographique (par exemple, la composante géométrique d'un objet est définie par la position d'un unique point, ou bien par la position d'une pluralités de points formant une ligne ou définissant une surface) ; et
- une composante descriptive, définissant au moins un attribut descriptif (aussi appelé « propriété de l'objet »).

Comme dans la technique de la demande FR1252873, l'équipement central 601 est adapté pour déterminer, en fonction des composantes géométriques des objets numériques et d'informations sur la position et l'orientation du dispositif de pointage 501, si la position d'un des objets est pointée par le dispositif de pointage 501. En d'autres termes, on utilise la technique de gestion du pointage décrite dans la demande FR1252873.

Par rapport à la technique de la demande FR1252873 (voir par exemple le contexte de la figure 1), l'équipement central 601 et le dispositif de pointage 501 sont adaptés pour permettre la création d'associations entre des objets numériques contenus dans la base de données SIG 6010, et former ainsi des groupes d'objets numériques associés. Comme détaillé par la suite à travers plusieurs exemples, la création d'une association entre plusieurs objets numériques comporte une succession d'étapes effectuées pour certaines par le dispositif de pointage 501 et pour d'autres par l'équipement central 601.

Dans les exemples d'association décrits par la suite, on considère uniquement l'association d'un couple d'objets numériques. Il est clair cependant que la présente invention s'applique également à des associations entre plus de deux objets numériques.

Dans une implémentation particulière, pour chaque association créée (et donc pour chaque groupe d'objets numériques associés), l'équipement central 601 stocke, par exemple dans une table, les identifiants des objets numériques associés ainsi que les paramètres suivants (ou seulement certain(s) d'entre eux) ;
- un premier paramètre indiquant si, et dans l'affirmative comment, la composante géométrique des objets numériques associés doit être modifiée après que la composante géométrique de l'un des objets numériques associés a été modifiée (en d'autres termes, si la position d'un des objets numériques associés change pour une nouvelle position, le premier paramètre indique si la position des autres objets numériques associés change également pour la nouvelle position) ;
- un deuxième paramètre indiquant si au moins une condition prédéterminée doit être vérifiée, avant d'autoriser le dispositif de pointage à effectuer (au moins) une action, relative au(x) attribut(s) défini(s) par la composante descriptive d'au moins un des objets numériques associés ;
- un troisième paramètre indiquant (au moins) une fonction devant être appliquée de manière similaire aux objets numériques associés.

Des exemples de ces paramètres (et des actions, conditions et fonctions associées) sont donnés par la suite, avec la description de divers exemples d'association.

On notera par ailleurs que dans certains exemples présentés par la suite, la présente technique permet de gérer deux catégories d'objets numériques dans la base de données SIG 6010 (seule la première catégorie est mentionnée dans la demande FR1252873).

La première catégorie d'objets numériques comprend des objets numériques correspondant à (c'est-à-dire qui sont des modèles) des objets réels de l'environnement dans lequel est mis en oeuvre le système d'information géographique. Par exemple, pour un réfrigérateur qui est un objet réel, on peut créer et stocker dans la base de données SIG 6010 un objet numérique « réfrigérateur », dont la composante géométrique définit la position géographique du réfrigérateur. Plus généralement, les objets réels considérés (c'est-à-dire dont les modèles sont contenus dans la base de données SIG 6010) peuvent être de toute nature : objets réels avec lesquels il est possible d'interagir grâce à l'équipement central et/ou le dispositif de pointage donné, ou bien objets réels avec lesquels il n'est pas possible d'interagir grâce à l'équipement central et/ou le dispositif de pointage donné).

La seconde catégorie d'objets numériques comprend des objets purement virtuels, c'est-à-dire des objets numériques dont la composante géométrique définit une position géographique indépendamment de la présence ou non d'un objet réel à cette position géographique. En d'autres termes, ce sont des objets numériques ne résultant pas de la modélisation d'un objet réel de l'environnement dans lequel est mis en oeuvre le système d'information géographique.

Les objets purement virtuels possèdent une composante descriptive définissant un ou plusieurs attributs, comme par exemple des objets multimédias (mémos virtuels, tableau virtuel (pour ces mémos virtuels), vidéos, photos, etc.) ou des liens (par exemple des adresses URL ou des adresse locales) permettant l'accès à des objets multimédias stockés sur d'autres équipements (par exemple des serveurs distants ou des dispositifs de stockage locaux).

L'utilisation de ces objets purement virtuels est le suivant : si la position d'un objet purement virtuel est pointée par un dispositif de pointage, l'équipement central permet au dispositif de pointage donné d'effectuer au moins une action relative au(x) attributs défini(s) par la composante descriptive de cet objet purement virtuel.

Optionnellement, l'équipement central effectue une étape de vérification qu'au moins une condition prédéterminée est vérifiée (par exemple vérification que l'identifiant du dispositif de pointage fait partie d'une liste prédéterminée), avant d'autoriser le dispositif de pointage à effectuer la ou les actions précitée(s).

Ainsi, dans le cas particulier d'une association entre un couple d'objets numériques, les trois cas suivants sont envisageables :
i. les deux objets numériques sont de la première catégorie (modèles d'objets réels) ;
ii. un objet numérique est de la première catégorie (modèle d'objet réel) et l'autre est de la seconde catégorie (objet purement virtuel) ;
iii. les deux objets numériques sont de la seconde catégorie (objets purement virtuels).

La notion d'association au sens de la présente invention peut être mise en cascade : un objet numérique, faisant partie d'un premier groupe d'objets numériques associés, peut également faire partie d'un second groupe d'objets numériques associés. Ainsi, le pointage de la position de cet objet numérique permet d'obtenir des informations et/ou d'agir sur les objets numériques du premier groupe et sur ceux du second groupe (voir ci-dessous l'exemple de l'objet numérique « tableau de mémos virtuels » associé d'une part à un ou plusieurs objets numériques « mémos virtuels » (pour former un premier groupe d'objets numériques associés) et d'autre part à un objet numérique « réfrigérateur » (pour former un second groupe d'objets numériques associés).

Plus généralement, le nouveau concept (selon la présente invention) d'association entre objets numériques de la base de données SIG 6010, peut être mis en oeuvre dans tout contexte dans lequel un système d'information géographique (SIG) est adapté pour être utilisé avec au moins un dispositif de pointage (selon une technique de gestion du pointage qui est identique ou non à celle décrite dans la demande FR1252873), et comprend un équipement central accédant à une base de données contenant une pluralité d'objets numériques.

### 5.3 Premier exemple d'association

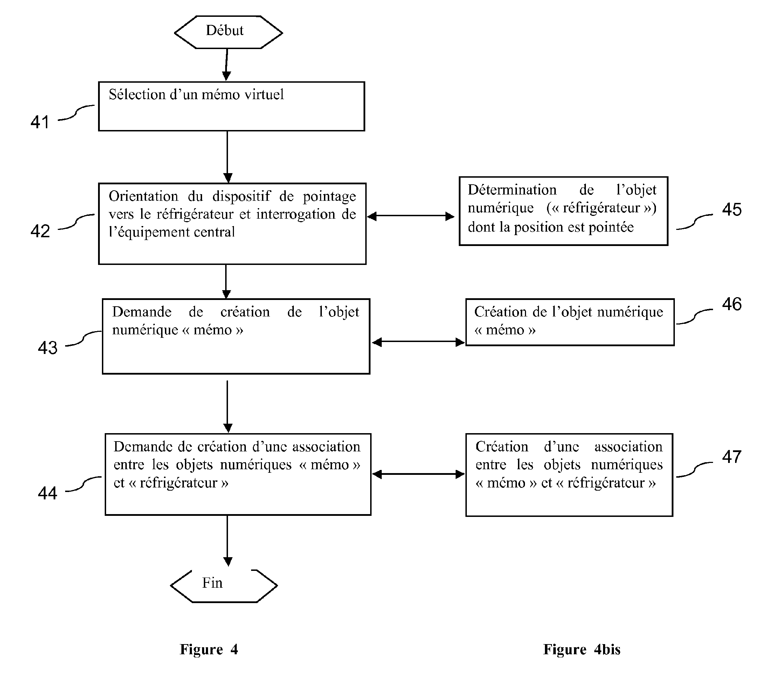

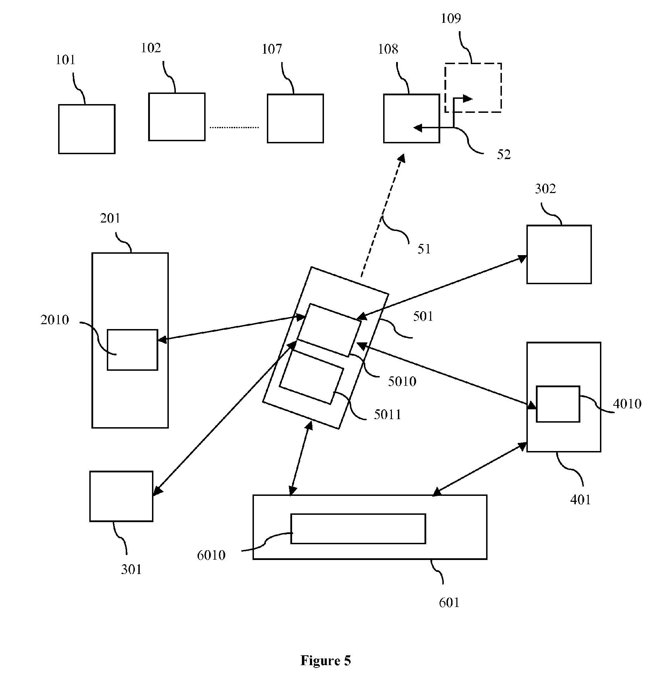

On présente maintenant, en relation avec les **figures 4, 4bis** **et** **5****,** un premier exemple d'association entre objets numériques selon l'invention. Les figures 4 et 4bis présentent les algorithmes exécutés par le dispositif de pointage et le système d'information géographique respectivement. La figure 5 illustre le contexte particulier dans lequel est mis en oeuvre ce premier exemple.

Outre les modifications précitées apportées à l'équipement central 601 et au dispositif de pointage 501 afin qu'ils puissent créer des associations entre objets numériques, le contexte de la figure 5 se distingue de celui de la figure 1 uniquement en ce qu'il comprend un objet réel supplémentaire, à savoir un réfrigérateur 108. Dans cet exemple, le réfrigérateur 108 est un objet réel avec lequel il n'est pas possible d'interagir, ni avec l'équipement central 601 ni avec le dispositif de pointage 501.

On suppose que la base de données SIG 6010 contient un objet numérique « réfrigérateur » qui est un modèle du réfrigérateur (objet réel) 108 et qui a comme position (composante géométrique) la position du réfrigérateur (objet réel) 108.

Dans ce premier exemple d'association, on suppose qu'un utilisateur souhaite créer un objet numérique « mémo virtuel » (référencé 109 sur la figure 5 et représenté en pointillés, pour symboliser le fait qu'il s'agit d'un objet purement virtuel, selon la définition donnée plus haut) et l'associer à un objet numérique « réfrigérateur » (i.e. le modèle du réfrigérateur 108).

Les étapes effectuées par l'équipement central 601 et le dispositif de pointage 501 sont détaillées sur les figures 4 et 4bis.

Dans une étape 41, via une interface homme-machine du dispositif de pointage 501, l'utilisateur sélectionne un mémo virtuel (par exemple une liste de courses) préalablement créée et stockée dans le dispositif de pointage 501.

Dans une étape 42, l'utilisateur oriente le dispositif de pointage 501 vers le réfrigérateur 108 (selon l'axe d'orientation symbolisé par la flèche référencée 51 sur la figure 5) et, via l'interface homme-machine du dispositif de pointage 501, demande à l'équipement central 601 de déterminer l'objet numérique dont la position est pointée par le dispositif de pointage 501.

Dans une étape 45, conformément à la technique de pointage décrite plus haut (voir figures 1 et 2), l'équipement central 601 détermine que l'objet numérique dont la position est pointée est l'objet numérique « réfrigérateur » (modèle du réfrigérateur 108) et en fournit l'identifiant au dispositif de pointage 501.

Dans une étape 43, via l'interface homme-machine du dispositif de pointage 501, l'utilisateur demande à l'équipement central 601 de créer un objet numérique « mémo » ayant une composante géométrique définissant une position identique à celle de l'objet numérique « réfrigérateur », et une composante descriptive définissant le mémo virtuel sélectionné à l'étape 41 comme un attribut descriptif. A cet effet, le dispositif de pointage 501 fournit à l'équipement central 601 l'identifiant de l'objet numérique « réfrigérateur ».

Dans une étape 46, l'équipement central 601 crée l'objet numérique « mémo » 109 et retourne l'identifiant de ce dernier au dispositif de pointage 501.

Dans une étape 44, via l'interface homme-machine du dispositif de pointage 501, l'utilisateur demande à l'équipement central 601 de créer une association entre l'objet numérique « mémo » et l'objet numérique « réfrigérateur ». A cet effet, le dispositif de pointage 501 fournit à l'équipement central 601 les identifiants de ces deux objets numériques.

Dans une étape 47, l'équipement central 601 crée l'association (symbolisée par la flèche référencée 52 sur la figure 5) et retourne une confirmation au dispositif de pointage 501.

Les paramètres de cette association permettent par exemple le fonctionnement ultérieur suivant. Lorsque l'utilisateur oriente le dispositif de pointage 501 vers le réfrigérateur 108 et, via l'interface homme-machine du dispositif de pointage 501, demande à l'équipement central 601 de déterminer l'objet numérique dont la position est pointée par le dispositif de pointage 501, l'équipement central 601 détermine que l'objet numérique dont la position est pointée est l'objet numérique « réfrigérateur » et que cet objet numérique est associé à l'objet numérique « mémo ». L'équipement central coopère avec le dispositif de pointage 501 pour que l'interface homme-machine de ce dernier permette à l'utilisateur de visualiser ces deux objets numériques (par exemple en affichant leurs identifiants, ou leurs images ou autre icones associés a cet identifiant), et également d'agir sur l'un et/ou l'autre. D'autre part, lors d'un déplacement du réfrigérateur 108 (et donc la modification de la position définie pour l'objet numérique « réfrigérateur »), il est par exemple choisi de modifier également de la même manière la position définie pour l'objet numérique « mémo ». Le choix qui est fait ici est l'enrichissement simple des données portées par l'objet numérique « réfrigérateur ».

### 5.4 Deuxième exemple d'association

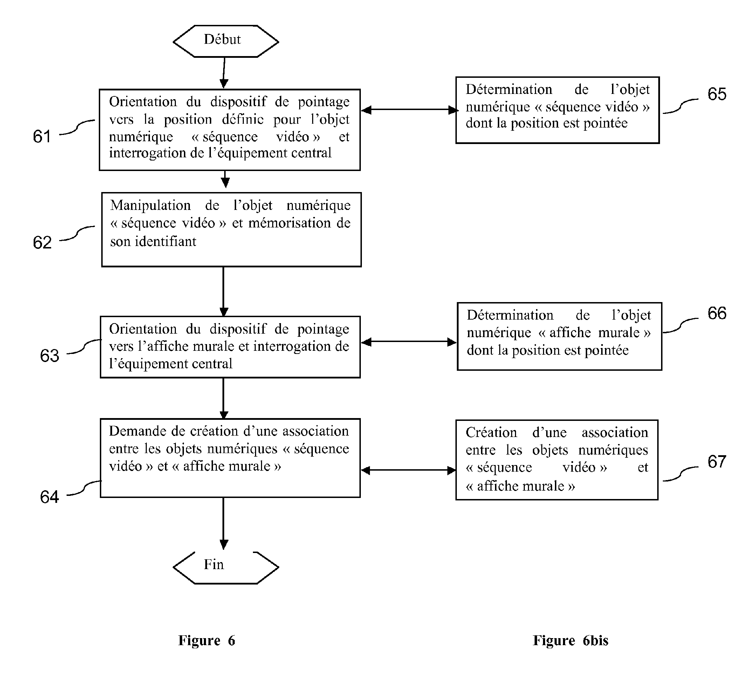

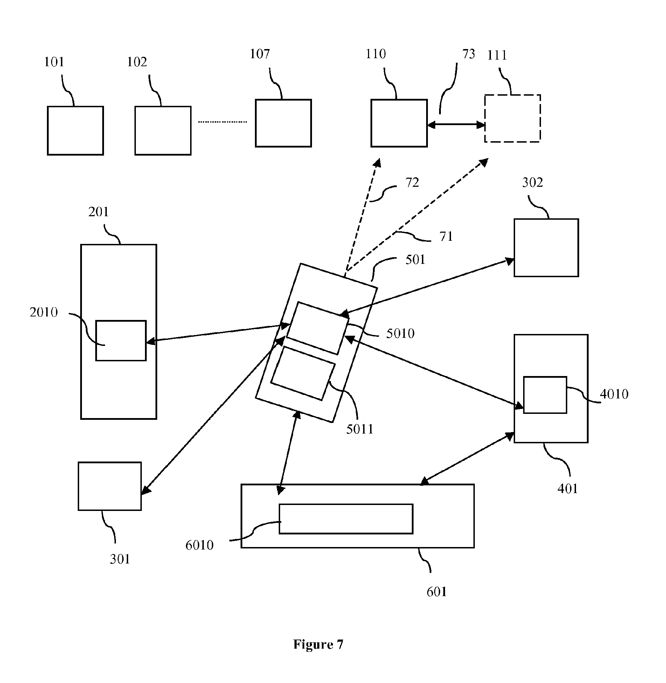

On présente maintenant, en relation avec les **figures 6, 6bis** **et** **7****,** un deuxième exemple d'association entre objets numériques selon l'invention. Les figures 6 et 6bis présentent les algorithmes exécutés par le dispositif de pointage et le système d'information géographique respectivement. La figure 7 illustre le contexte particulier dans lequel est mis en oeuvre ce deuxième exemple.

Outre les modifications précitées apportées à l'équipement central 601 et au dispositif de pointage 501 afin qu'ils puissent créer des associations entre objets numériques, le contexte de la figure 7 se distingue de celui de la figure 1 uniquement en ce qu'il comprend un objet réel supplémentaire, à savoir une affiche murale 110. Dans cet exemple, l'affiche murale 110 est un objet réel avec lequel il n'est pas possible d'interagir, ni avec l'équipement central 601 ni avec le dispositif de pointage 501.

On suppose que la base de données SIG 6010 contient un objet numérique « affiche murale » qui est un modèle de l'affiche murale (objet réel) 110 et qui a comme position (composante géométrique) la position de l'affiche murale (objet réel) 110.

On suppose que la base de données SIG 6010 contient également un objet numérique « séquence vidéo » (référencé 111 sur la figure 7 et représenté en pointillés, pour symboliser le fait qu'il s'agit d'un objet purement virtuel, selon la définition donnée plus haut). L'objet numérique « séquence vidéo » 111 possède une composante géométrique définissant une position (distincte de celle de l'objet numérique « affiche murale »), et une composante descriptive définissant par exemple un chemin d'accès à une séquence vidéo particulière (adresse URL ou adresse locale au sein d'une unité de stockage), comme un attribut descriptif.

Dans ce deuxième exemple d'association, on suppose qu'un utilisateur souhaite associer l'objet numérique « séquence vidéo » 111 avec l'objet numérique « affiche murale » (i.e. le modèle de l'affiche murale 110).

Les étapes effectuées par l'équipement central 601 et le dispositif de pointage 501 sont détaillées sur les figures 6 et 6bis.

Dans une étape 61, l'utilisateur oriente le dispositif de pointage 501 vers la position définie pour l'objet numérique « séquence vidéo » 111 (selon l'axe d'orientation symbolisé par la flèche référencée 71 sur la figure 7) et, via l'interface homme-machine du dispositif de pointage 501, demande à l'équipement central 601 de déterminer l'objet numérique dont la position est pointée par le dispositif de pointage 501.

Dans une étape 65, conformément à la technique de pointage décrite plus haut (voir figures 1 et 2), l'équipement central 601 détermine que l'objet numérique dont la position est pointée est l'objet numérique « séquence vidéo » 111, et en fournit l'identifiant au dispositif de pointage 501.

Dans une étape 62, via l'interface homme-machine du dispositif de pointage 501, l'utilisateur manipule une représentation de l'objet numérique « séquence vidéo » 111 et en mémorise l'identifiant.

Dans une étape 63, l'utilisateur oriente le dispositif de pointage 501 vers l'affiche murale 110 (selon l'axe d'orientation symbolisé par la flèche référencée 72 sur la figure 7) et, via l'interface homme-machine du dispositif de pointage 501, demande à l'équipement central 601 de déterminer l'objet numérique dont la position est pointée par le dispositif de pointage 501.

Dans une étape 66, conformément à la technique de pointage décrite plus haut (voir figures 1 et 2), l'équipement central 601 détermine que l'objet numérique dont la position est pointée est l'objet numérique « affiche murale » (modèle de l'affiche murale 110). L'équipement central 602 fournit au dispositif de pointage 501 l'identifiant de l'objet numérique « affiche murale ».

Dans une étape 64, via l'interface homme-machine du dispositif de pointage 501, l'utilisateur demande à l'équipement central 601 de créer une association entre l'objet numérique « séquence vidéo » 111 et l'objet numérique « affiche murale ». A cet effet, le dispositif de pointage 501 fournit à l'équipement central 601 les identifiants de ces deux objets numériques.

Dans une étape 67, l'équipement central 601 crée l'association (symbolisée par la flèche référencée 73 sur la figure 5) et retourne une confirmation au dispositif de pointage 501.

Les paramètres de cette association permettent par exemple le fonctionnement ultérieur suivant. Lorsque l'utilisateur oriente le dispositif de pointage 501 vers l'affiche murale 110 et, via l'interface homme-machine du dispositif de pointage 501, demande à l'équipement central 601 de déterminer l'objet numérique dont la position est pointée par le dispositif de pointage 501, l'équipement central 601 détermine que l'objet numérique dont la position est pointée est l'objet numérique « affiche murale » et que cet objet numérique est associé à l'objet numérique «séquence vidéo» 111. L'équipement central coopère avec le dispositif de pointage 501 pour que l'interface homme-machine de ce dernier permette à l'utilisateur de visualiser ces deux objets numériques (par exemple en affichant leurs identifiants, ou leurs images ou autre icones associés a cet identifiant), et également d'agir sur l'un et/ou l'autre (par exemple, déclencher la lecture de la séquence vidéo particulière dont l'adresse est stockée comme un attribut descriptif de l'objet numérique « séquence vidéo » 111). D'autre part, lors d'un déplacement de l'affiche murale 110 (et donc la modification de la position définie pour l'objet numérique « affiche murale »), il est par exemple choisi de ne pas modifier la position définie pour l'objet numérique « séquence vidéo » 111. On suppose dans ce cas que l'objet numérique « séquence vidéo » 111 est également associé à un autre objet numérique « unité de stockage » (modèle d'un objet réel présent dans l'environnement).

### 5.5 Troisième exemple d'association

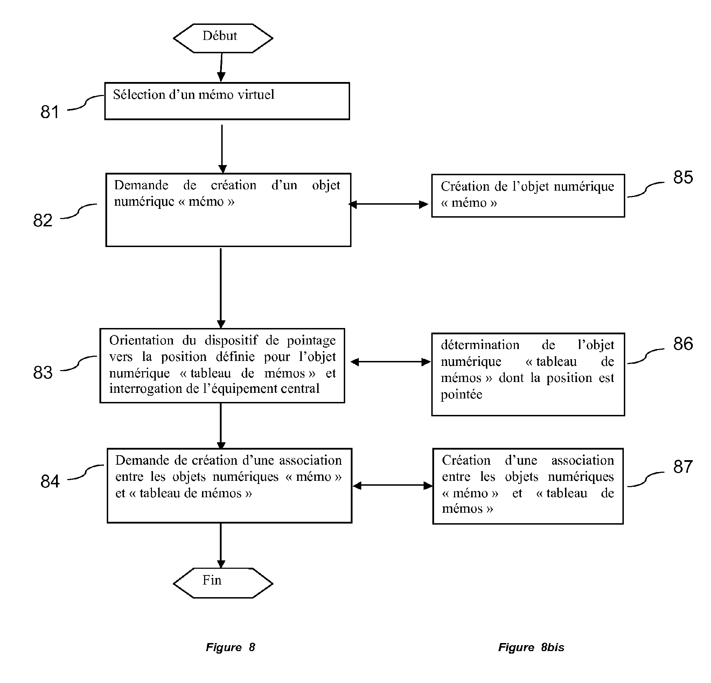

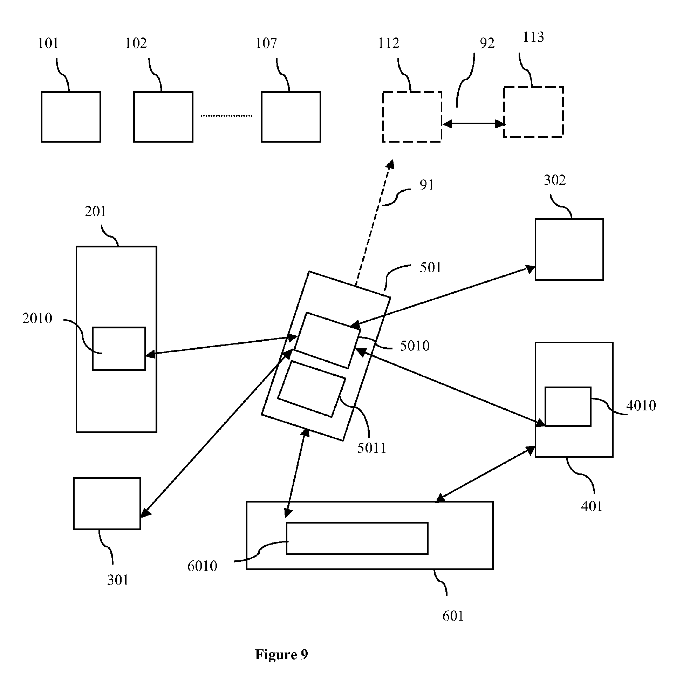

On présente maintenant, en relation avec les **figures 8, 8bis** **et** **9****,** un troisième exemple d'association entre objets numériques selon l'invention. Les figures 8 et 8bis présentent les algorithmes exécutés par le dispositif de pointage et le système d'information géographique respectivement. La figure 9 illustre le contexte particulier dans lequel est mis en oeuvre ce troisième exemple.

Hormis les modifications précitées apportées à l'équipement central 601 et au dispositif de pointage 501 afin qu'ils puissent créer des associations entre objets numériques, le contexte de la figure 9 ne se distingue pas de celui de la figure 1 (pas d'objet réel supplémentaire).

On suppose que la base de données SIG 6010 contient un objet numérique « tableau de mémos » (référencé 112 sur la figure 9 et représenté en pointillés, pour symboliser le fait qu'il s'agit d'un objet purement virtuel, selon la définition donnée plus haut). Il est défini notamment par une position (composante géométrique), qui dans cet exemple ne correspond pas à la position d'un objet réel particulier.

Dans ce troisième exemple d'association, on suppose qu'un utilisateur souhaite créer un objet numérique « mémo virtuel » (référencé 113 sur la figure 9 et représenté en pointillés, pour symboliser le fait qu'il s'agit d'un objet purement virtuel, selon la définition donnée plus haut) et l'associer à l'objet numérique « tableau de mémos » 112.

Les étapes effectuées par l'équipement central 601 et le dispositif de pointage 501 sont détaillées sur les figures 8 et 8bis.

Dans une étape 81, via une interface homme-machine du dispositif de pointage 501, l'utilisateur sélectionne un mémo virtuel (par exemple une liste de courses) préalablement créée et stockée dans le dispositif de pointage 501.

Dans une étape 82, via l'interface homme-machine du dispositif de pointage 501, l'utilisateur demande à l'équipement central 601 de créer un objet numérique « mémo », avec une composante géométrique non définie à ce stade, et une composante descriptive définissant le mémo virtuel sélectionné à l'étape 81 comme un attribut descriptif.

Dans une étape 85, l'équipement central 601 crée l'objet numérique « mémo » 113 et retourne l'identifiant de ce dernier au dispositif de pointage 501.

Dans une étape 83, l'utilisateur oriente le dispositif de pointage 501 vers la position définie pour l'objet numérique « tableau de mémos » 112 (selon l'axe d'orientation symbolisé par la flèche référencée 91 sur la figure 9) et, via l'interface homme-machine du dispositif de pointage 501, demande à l'équipement central 601 de déterminer l'objet numérique dont la position est pointée par le dispositif de pointage 501.

Dans une étape 86, conformément à la technique de pointage décrite plus haut (voir figures 1 et 2), l'équipement central 601 détermine que l'objet numérique dont la position est pointée est l'objet numérique « tableau de mémos » 112 et en fournit l'identifiant au dispositif de pointage 501.

Dans une étape 84, via l'interface homme-machine du dispositif de pointage 501, l'utilisateur demande à l'équipement central 601 de créer une association entre l'objet numérique « mémo » 113 et l'objet numérique « tableau de mémos » 112. A cet effet, le dispositif de pointage 501 fournit à l'équipement central 601 les identifiants de ces deux objets numériques.

Dans une étape 87, l'équipement central 601 crée l'association (symbolisée par la flèche référencée 92 sur la figure 9) et retourne une confirmation au dispositif de pointage 501. Au passage, l'équipement central 601 définie comme position pour l'objet numérique « mémo » 113 celle de l'objet numérique « tableau de mémos » 112.

Les paramètres de cette association permettent par exemple le fonctionnement ultérieur suivant. Lorsque l'utilisateur oriente le dispositif de pointage 501 vers la position définie pour l'objet numérique « tableau de mémos » 112 et, via l'interface homme-machine du dispositif de pointage 501, demande à l'équipement central 601 de déterminer l'objet numérique dont la position est pointée par le dispositif de pointage 501, l'équipement central 601 détermine que l'objet numérique dont la position est pointée est l'objet numérique « tableau de mémos » 112 et que cet objet numérique est associé à l'objet numérique « mémo » 113. L'équipement central coopère avec le dispositif de pointage 501 pour que l'interface homme-machine de ce dernier permette à l'utilisateur de visualiser ces deux objets numériques (par exemple en affichant leurs identifiants, ou leurs images ou autre icones associés a cet identifiant), et également d'agir sur l'un et/ou l'autre. D'autre part, lors d'une modification de la position définie pour l'objet numérique « tableau de mémos » 112, il est par exemple choisi de modifier également de la même manière la position définie pour l'objet numérique « mémo » 113. Le choix qui est fait ici est l'enrichissement simple des données portées par l'objet numérique « tableau de mémos » 112.

Il faut remarquer ici que l'objet numérique « tableau de mémos » 112 peut lui-même être associé à l'objet numérique « réfrigérateur » (modèle du réfrigérateur 108, cf description de la figure 5). Dans ce cas, lors d'un déplacement du réfrigérateur 108 (et donc la modification de la position définie pour l'objet numérique « réfrigérateur »), il est par exemple choisi de modifier également de la même manière la position définie pour l'objet numérique « tableau de mémos » 112, et donc (par effet de cascade entre associations) la position définie pour l'objet numérique « mémo » 113.

### 5.6 Première technique de définition de la position d'un objet

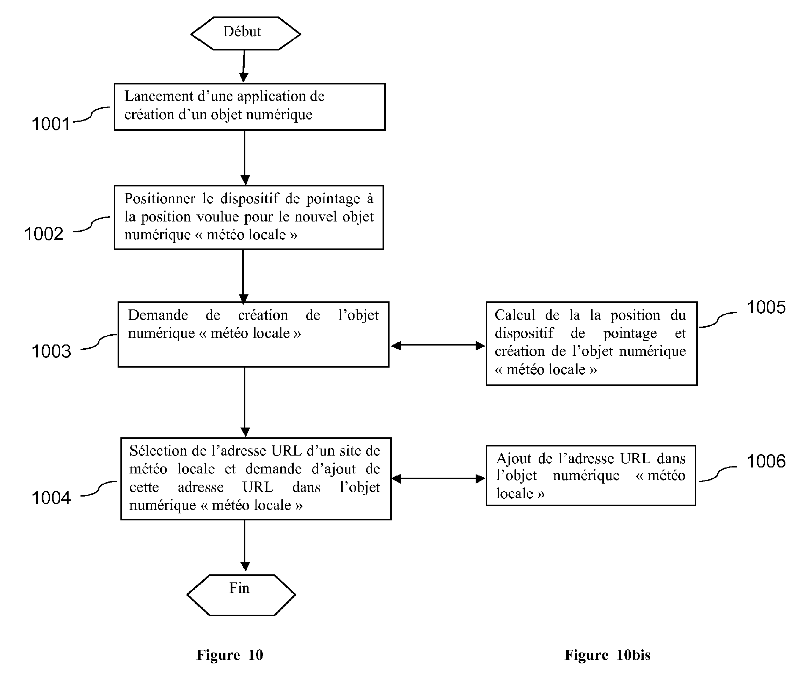

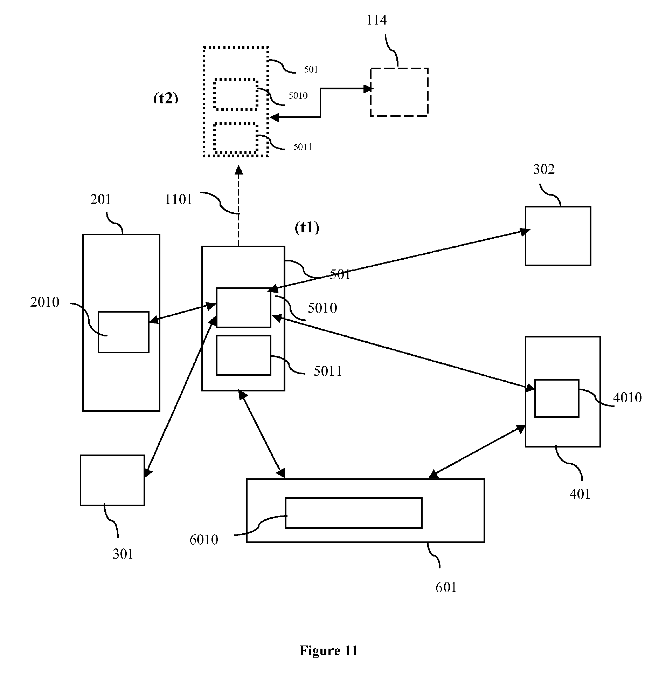

On présente maintenant, en relation avec les **figures 10, 10bis** **et** **11****,** une première technique selon l'invention, pour définir la position d'un objet numérique lors de sa création. Les figures 10 et 10bis présentent les algorithmes exécutés par le dispositif de pointage et le système d'information géographique respectivement. La figure 11 illustre le contexte particulier dans lequel est mis en oeuvre cette première technique de définition de position.

Hormis les modifications précitées apportées à l'équipement central 601 et au dispositif de pointage 501 afin qu'ils puissent créer des associations entre objets numériques, le contexte de la figure 11 ne se distingue pas de celui de la figure 1 (pas d'objet réel supplémentaire).

A titre d'illustration de cette première technique de définition de position, on suppose qu'un utilisateur souhaite créer et définir la position d'un objet numérique « météo locale » (référencé 114 sur la figure 11 et représenté en pointillés, pour symboliser le fait qu'il s'agit d'un objet purement virtuel, selon la définition donnée plus haut).

Les étapes effectuées par l'équipement central 601 et le dispositif de pointage 501 sont détaillées sur les figures 10 et 10bis.

Dans une étape 1001, via une interface homme-machine du dispositif de pointage 501, l'utilisateur lance une application de création d'un objet numérique.

Dans une étape 1002, l'utilisateur déplace le dispositif de pointage 501 depuis une position initiale (à l'instant t1 : dispositif de pointage 501 représenté en trait continu sur la figure 11) jusqu'à une position voulue pour le nouvel objet numérique « météo locale » (à l'instant t2 : dispositif de pointage 501 représenté en pointillés sur la figure 11). Cette position voulue est par exemple le centre d'une fenêtre de la pièce où est mis en oeuvre le système d'information géographique.

Dans une étape 1003, via une interface homme-machine du dispositif de pointage 501, l'utilisateur demande à l'équipement central 601 de calculer la position souhaitée pour le nouvel objet numérique « météo locale » (position du dispositif de pointage 501 à l'instant t2) et de créer ce nouvel objet numérique « météo locale ».

Dans une étape 1005, l'équipement central 601 calcule la position souhaitée et crée l'objet numérique « météo locale » 114 (avec une composante géométrique définissant cette position souhaitée), puis retourne l'identifiant de ce dernier au dispositif de pointage 501.

Dans une étape 1004, via l'interface homme-machine du dispositif de pointage 501, l'utilisateur sélectionne l'adresse URL d'un site de météo locale et demande à l'équipement central 601 d'ajouter cette adresse URL dans l'objet numérique « météo locale » 114 (comme un attribut descriptif au sein de la composante descriptive). A cet effet, le dispositif de pointage 501 fournit à l'équipement central 601 l'identifiant de l'objet numérique « météo locale » 114.

Dans une étape 1006, l'équipement central 601 ajoute cette adresse URL dans l'objet numérique « météo locale » 114 et retourne une confirmation au dispositif de pointage 501.

Suite à cette création, lorsque l'utilisateur oriente le dispositif de pointage 501 vers la position définie pour l'objet numérique « météo locale » 114 et, via l'interface homme-machine du dispositif de pointage 501, demande à l'équipement central 601 de déterminer l'objet numérique dont la position est pointée par le dispositif de pointage 501, l'équipement central 601 détermine que l'objet numérique dont la position est pointée est l'objet numérique « météo locale » 114. L'équipement central coopère avec le dispositif de pointage 501 pour que l'interface homme-machine de ce dernier permette à l'utilisateur d'accéder au site de météo locale précité.

Le mécanisme décrit ci-dessus peut être transposé à la création et la définition de la position d'un objet numérique qui est un modèle d'un objet réel (par exemple l'objet numérique « réfrigérateur » qui est le modèle du réfrigérateur (objet réel) 108 sur la figure 5).

Un mécanisme (non représenté), proche de celui décrit ci-dessus, permet de modifier la position définie pour un objet numérique déjà existant. Dans une étape initiale, via une interface homme-machine du dispositif de pointage 501, l'utilisateur lance une application de modification de la position d'un objet numérique. Dans une deuxième étape, l'utilisateur déplace le dispositif de pointage 501 jusqu'à une nouvelle position voulue pour l'objet numérique « météo locale ». Dans une troisième étape, via une interface homme-machine du dispositif de pointage 501, l'utilisateur demande à l'équipement central 601 de calculer la nouvelle position souhaitée et de l'affecter à l'objet numérique « météo locale ». Dans une quatrième étape, l'équipement central 601 calcule la nouvelle position souhaitée et l'affecte à l'objet numérique « météo locale » (modification de la composante géométrique), puis retourne une confirmation au dispositif de pointage 501.

### 5.7 Seconde technique de définition de la position d'un objet

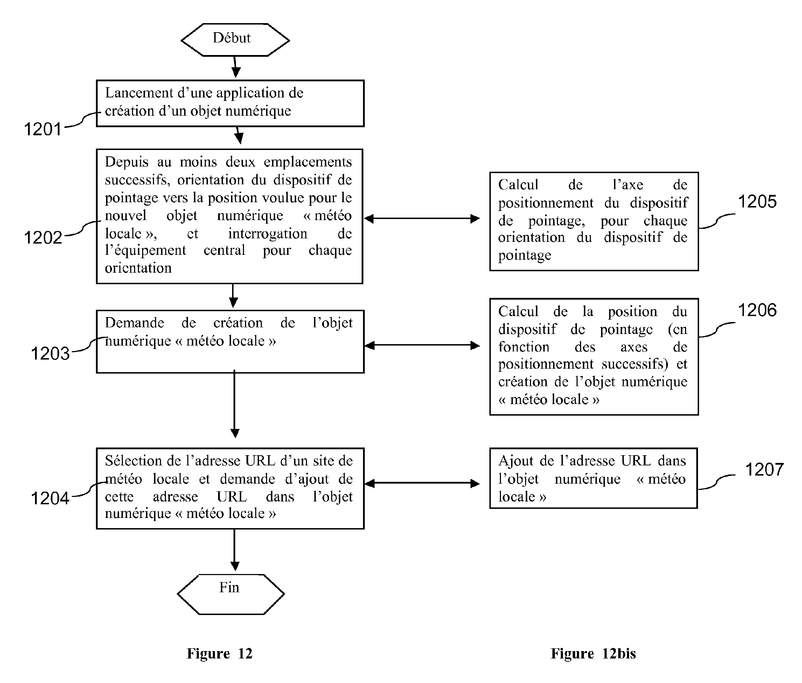

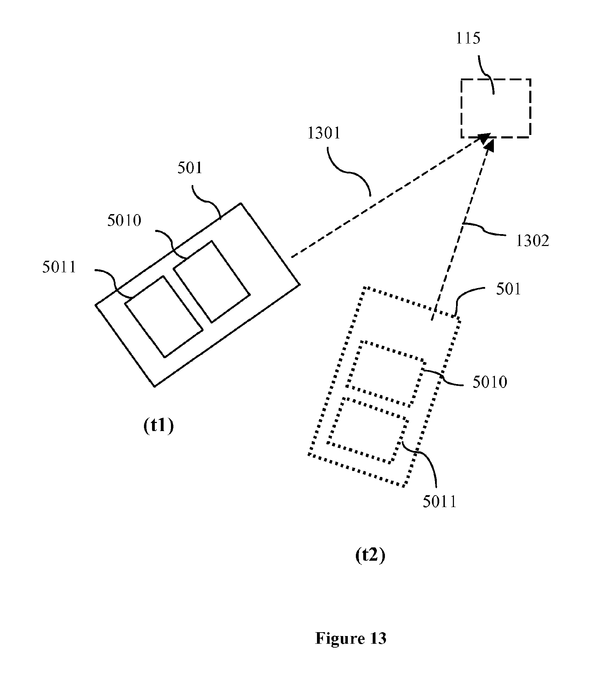

On présente maintenant, en relation avec les **figures 12, 12bis** **et** **13****,** une seconde technique selon l'invention, pour définir la position d'un objet numérique lors de sa création. Les figures 12 et 12bis présentent les algorithmes exécutés par le dispositif de pointage et le système d'information géographique respectivement. La figure 13 illustre le contexte particulier dans lequel est mis en oeuvre cette seconde technique de définition de position.

Hormis les modifications précitées apportées à l'équipement central 601 et au dispositif de pointage 501 afin qu'ils puissent créer des associations entre objets numériques, le contexte de la figure 11 ne se distingue pas de celui de la figure 1 (pas d'objet réel supplémentaire).

A titre d'illustration de cette seconde technique de définition de position, on suppose à nouveau qu'un utilisateur souhaite créer et définir la position d'un objet numérique « météo locale » (référencé 115 sur la figure 13 et représenté en pointillés, pour symboliser le fait qu'il s'agit d'un objet purement virtuel, selon la définition donnée plus haut).

Les étapes effectuées par l'équipement central 601 et le dispositif de pointage 501 sont détaillées sur les figures 12 et 12bis.

Dans une étape 1201, via une interface homme-machine du dispositif de pointage 501, l'utilisateur lance une application de création d'un objet numérique.

Dans une étape 1202, depuis au moins deux emplacements distincts (correspondant aux instants t1 et t2 sur la figure 13), l'utilisateur oriente (c'est-à-dire pointe physiquement) le dispositif de pointage 501 vers une position voulue pour le nouvel objet numérique « météo locale » (sur la figure 13, le dispositif de pointage 501 est représenté en trait continu à l'instant t1 et en pointillés à l'instant t2).

Dans une étape 1205, l'équipement central 601 calcule l'axe de positionnement du dispositif de pointage 501, pour chacune des orientations successives (c'est-à-dire aux instants t1 et t2 dans cet exemple).

Dans une étape 1203, via une interface homme-machine du dispositif de pointage 501, l'utilisateur demande à l'équipement central 601 de calculer la position souhaitée pour le nouvel objet numérique « météo locale » et de créer ce nouvel objet numérique.

Dans une étape 1205, l'équipement central 601 calcule la position souhaitée et crée l'objet numérique « météo locale » 114 (avec une composante géométrique définissant cette position souhaitée), puis retourne l'identifiant de ce dernier au dispositif de pointage 501.

Les étapes 1204 et 1207 sont identiques aux étapes 1004 et 1006 des figures 10 et 10bis.

### 5.8 Exemple de structure du dispositif de pointage et de l'équipement central

Les **figures 3 et 3bis** présentent la structure d'un dispositif de pointage 501 et d'un équipement central 601 respectivement, selon un mode de réalisation particulier de l'invention.

Le dispositif de pointage 501 et l'équipement central 601 comprennent chacun une mémoire RAM 33, 33', une unité de traitement 32, 32', équipée par exemple d'un processeur, et pilotée par un programme d'ordinateur stocké dans une mémoire ROM 31, 31'.

A l'initialisation, les instructions de code du programme d'ordinateur sont par exemple chargées dans la mémoire RAM 33, 33' avant d'être exécutées par le processeur de l'unité de traitement 32, 32', permettant ainsi :
- au dispositif de pointage 501 d'effectuer au moins certains des algorithmes des figures 4, 6, 8, 10 et 12 ; et
- à l'équipement central 601 d'effectuer au moins certains des algorithmes des figures 2, 4bis, 6bis, 8bis, 10bis et 12bis.

Les figures 3 et 3bis illustrent seulement une manière particulière, parmi plusieurs possibles, de réaliser la technique de l'invention dans le dispositif de pointage 501 et l'équipement central 601. En effet, dans ces entités 501 et 601, la technique de l'invention se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non amovible, ce médium de stockage étant lisible partiellement ou totalement par un ordinateur ou un processeur.

### 5.9 Variantes

Au-delà des exemples discutés ci-dessus, il est clair que de nombreuses autres associations (entre objets numériques de la base de données du système d'information géographique) peuvent être envisagées sans sortir du cadre de l'invention.

Voici deux autres exemples d'association entre deux objets numériques, dans le cas où l'un est un modèle d'un objet réel et l'autre un objet purement virtuel :
- utiliser son propre smart phone (dispositif de pointage) 501 pour placer (cacher) un mot de passe sous forme de mémo virtuel « dans le cadre photo de son bureau » (ou plus précisément en définissant pour l'objet numérique « mémo » une position qui est celle du cadre photo). Dans ce cas précis, l'association entre l'objet numérique (purement virtuel) « mémo » et l'objet numérique (modèle d'un objet réel) « cadre photo » permet à l'application sur le smart phone, lors du pointage vers le cadre photo, de coopérer avec l'équipement central 601 pour découvrir le mot de passe qui y est caché. On peut prévoir que cette découverte n'est possible (c'est-à-dire autorisée) par ce smart phone que si l'association porte l'information d' « autorisation de découverte » pour ce smart phone. D'autre part, lors du déplacement du cadre photo (et donc le changement de la position définie pour l'objet numérique « cadre photo »), il est par exemple choisi de modifier également (et de la même manière) la position définie pour l'objet numérique « mémo » contenant le mot de passe (en tant qu'attribut descriptif) ;

- un technicien laisse sous forme de mémo virtuel des instructions « sur un appareil en panne » (ou plus précisément en définissant pour l'objet numérique « mémo » une position qui est celle de l'appareil en panne) pour un autre technicien qui viendra terminer la réparation, Dans ce cas précis, l'association entre l'objet numérique (purement virtuel) « mémo » et l'objet numérique (modèle d'un objet réel) « appareil en panne » permet à l'application sur le smart phone, lors du pointage vers l'appareil en panne de découvrir les instructions laissées par le premier technicien. On peut prévoir que cette découverte n'est possible (c'est-à-dire autorisée) que par un smart phone appartenant à un groupe de smart phones de la société de maintenance. Cette découverte n'est possible par le smart phone du second technicien que si l'association porte l'information d' « autorisation de découverte » pour le groupe de smart phones de la société de maintenance.

Voici un autre exemple d'association entre deux objets numériques, dans le cas où les deux sont des modèles d'un objet réel :
- utiliser son propre smart phone (dispositif de pointage) 501 pour créer une association entre deux objets numériques qui sont les modèles de deux téléviseurs (objets réels). Dans ce cas précis, l'association permet à une application de diffusion vidéo d'un Système d'Information (SI) connecté au Système d'Information Géographique (SIG), de découvrir que lors de la diffusion vers le premier téléviseur, elle doit aussi diffuser vers le second. D'autre part, lors du déplacement du premier téléviseur (et donc le changement de la position définie pour l'objet numérique « premier téléviseur »), il est choisi de ne pas déplacer la position définie pour l'objet numérique « second téléviseur », du fait que les deux téléviseurs sont des objets réels ayant leur propre position dans l'environnement.

## Revendications

1. Procédé de gestion d'un système d'information géographique adapté pour être utilisé avec au moins un dispositif de pointage (501), le système d'information géographique comprenant un équipement central (601) accédant à une base de données (6010) contenant une pluralité d'objets numériques, chaque objet numérique possédant un identifiant et étant défini dans la base de données par une composante géométrique définissant une position géographique et par une composante descriptive définissant au moins un attribut descriptif, l'équipement central étant adapté pour déterminer, en fonction des composantes géométriques des objets numériques et d'informations sur la position et l'orientation d'un dispositif de pointage donné, si la position d'un des objets numériques est pointée par le dispositif de pointage donné, le procédé étant **caractérisé en ce que** l'équipement central effectue une étape (47, 67, 87) de création d'une association entre au moins deux objets numériques contenus dans ladite base de données, afin de former un groupe d'objets numériques associés.

2. Procédé selon la revendication 1, **caractérisé en ce que** ladite association est définie par au moins un paramètre appartenant au groupe comprenant :
- un premier paramètre indiquant si, et dans l'affirmative comment, la composante géométrique des objets numériques associés doit être modifiée après que la composante géométrique de l'un des objets numériques associés a été modifiée ;
- un deuxième paramètre indiquant si au moins une condition prédéterminée doit être vérifiée, avant d'autoriser le dispositif de pointage donné à effectuer une action relative au(x) attribut(s) défini(s) par la composante descriptive d'au moins un des objets numériques associés ; et
- un troisième paramètre indiquant au moins une fonction devant être appliquée de manière similaire aux objets numériques associés.

3. Procédé selon la revendication 2, **caractérisé en ce que** ladite action appartient au groupe comprenant : visualisation, utilisation, modification, ajout et suppression.

4. Procédé selon l'une quelconque des revendications 1 à 3, **caractérisé en ce que** le groupe d'objets numériques associés appartient au groupe comprenant :
- des couples dont chacun des deux objets numériques est un modèle d'un objet réel ;
- des couples dont un objet numérique est un objet purement virtuel dont la composante géométrique définit une position géographique indépendamment de la présence ou non d'un objet réel à ladite position géographique, et l'autre objet numérique est un modèle d'un objet réel ; et
- des couples dont chacun des deux objets numériques est un objet purement virtuel dont la composante géométrique définit une position géographique indépendamment de la présence ou non d'un objet réel à ladite position géographique.

5. Procédé selon la revendication 4, **caractérisé en ce que** lesdits objets réels appartiennent au groupe comprenant :
- des objets réels avec lesquels il est possible d'interagir grâce à l'équipement central et/ou le dispositif de pointage donné ; et
- des objets réels avec lesquels il n'est pas possible d'interagir grâce à l'équipement central et/ou le dispositif de pointage donné.

6. Procédé selon la revendication 4 ou 5, **caractérisé en ce que** la composante descriptive de chaque objet purement virtuel définit au moins un attribut descriptif appartenant au groupe comprenant :
- au moins un objet multimédia ; et
- au moins un lien permettant l'accès à un objet multimédia.

7. Procédé selon l'une quelconque des revendications 1 à 6, **caractérisé en ce qu'**au moins un des objets numériques associés dudit groupe fait également partie d'au moins un autre groupe d'objets numériques associés.

8. Procédé selon l'une quelconque des revendications 1 à 7, **caractérisé en ce que** ladite étape de création d'une association comprend les étapes suivantes :
a) détermination (45) par l'équipement central d'un premier objet numérique dont la position est pointée par le dispositif de pointage donné ;
b) création (46) par l'équipement central d'un second objet numérique, dont la composante géométrique définit la même position géographique que la composante géographique du premier objet numérique, et dont la composante descriptive comprend un attribut descriptif sélectionné via une interface homme-machine du dispositif de pointage donné; et
c) création (47) par l'équipement central d'une association entre lesdits premier et second objets numériques.

9. Procédé selon la revendication 8, **caractérisé en ce que** les étapes a), b) et c) sont effectuées par l'équipement central sur requête du dispositif de pointage donné.

10. Procédé selon l'une quelconque des revendications 1 à 7, **caractérisé en ce que** ladite étape de création d'une association comprend les étapes suivantes :
a') détermination (65) par l'équipement central d'un premier objet numérique dont la position est pointée par le dispositif de pointage donné ;
b') détermination (66) par l'équipement central d'un second objet numérique dont la position est pointée par le dispositif de pointage donné ; et
c') création (67) par l'équipement central d'une association entre lesdits premier et second objets numériques.

11. Procédé selon la revendication 10, **caractérisé en ce que** les étapes a'), b') et c') sont effectuées par l'équipement central sur requête du dispositif de pointage donné.

12. Produit programme d'ordinateur, comprenant des instructions de code de programme pour la mise en oeuvre du procédé selon au moins une des revendications 1 à 11, lorsque ledit programme est exécuté sur un ordinateur.

13. Médium de stockage lisible par ordinateur et non transitoire, stockant un programme d'ordinateur comprenant un jeu d'instructions exécutables par un ordinateur ou un processeur pour mettre en oeuvre le procédé selon au moins une des revendications 1 à 11.

14. Système d'information géographique adapté pour être utilisé avec au moins un dispositif de pointage (501), le système d'information géographique comprenant un équipement central (601) accédant à une base de données (6010) contenant une pluralité d'objets numériques, chaque objet numérique possédant un identifiant et étant défini dans la base de données par une composante géométrique définissant une position géographique et par une composante descriptive définissant au moins un attribut descriptif, l'équipement central étant adapté pour déterminer, en fonction des composantes géométriques des objets numériques et d'informations sur la position et l'orientation d'un dispositif de pointage donné, si la position d'un des objets numériques est pointée par le dispositif de pointage donné, **caractérisé en ce que** l'équipement central comprend des moyens (31', 32', 33') de création d'une association entre des premier et second objets numériques contenus dans ladite base de données, afin de former un groupe d'objets numériques associés.
